# EUROPÄISCHE PATENTSCHRIFT

(11) **EP 2 259 891 B1**
(45) Veröffentlichungstag und Bekanntmachung des Hinweises auf die Patenterteilung: **10.05.2017**
(21) Anmeldenummer: 09719807.1
(22) Anmeldetag: 13.03.2009
(51) Int. Cl.: B23K 20/12

(54) **ULTRASCHALLUNTERSTÜTZTES RÜHRREIBSCHWEISSEN**
ULTRASOUND-ASSISTED FRICTION STIR WELDING
SOUDAGE PAR FRICTION ASSISTÉ PAR ULTRASONS

(30) Priorität: 14.03.2008 DE 102008014320
(43) Veröffentlichungstag der Anmeldung: 15.12.2010
(73) Patentinhaber: Fraunhofer-Gesellschaft zur Förderung der angewandten Forschung e.V., 80686 München (DE); TU Kaiserslautern, 67663 Kaiserslautern (DE)
(72) Erfinder: DOBMANN, Gerd, 66125 Saarbrücken (DE); EIFLER, Dietmar, 76833 Frankweiler (DE); JENE, Tobias, 66564 Ottweiler (DE); WAGNER, Guntram, 67697 Otterberg (DE)
(74) Vertreter: Pfenning, Meinig & Partner mbB
(86) Internationale Anmeldenummer: PCT/EP2009/001847
(87) Internationale Veröffentlichungsnummer: WO 2009/112278

(56) Entgegenhaltungen:
- WO-A-2007/102540
- DE-U1-202004 010 567
- JP-A- 2004 344 906
- JP-A- 2005 288 499
- JP-A- 2008 110 374
- US-A1- 2008 099 533

## Beschreibung

Die Erfindung betrifft ein Rührreibschweißverfahren, bei welchem die Ausbildung von Bändern aus Oxidpartikeln entlang der Schweißnaht vermieden wird. Die Erfindung betrifft außerdem ein mit diesem Verfahren hergestelltes Werkstück. Die Gattung zeigt die JP-A-2004 344906. Ultraschallenergie wird seit ihrer Endeckung in unterschiedlichsten Bereichen eingesetzt. So finden beispielsweise ständig Weiterentwicklungen und auch Patenterteilungen zum Sieben von Schüttgütern statt. Auch ultraschallunterstütztes Löten hat in den letzten Jahren eine erhöhte Aufmerksamkeit erfahren und zu Patentanmeldungen bzw. -erteilungen geführt. Es ist auch bereits seit Mitte des letzten Jahrhunderts bekannt, dass eine Ultraschallbeaufschlagung zu Verbesserungen der Schweißnahtqualität bei Schmelzschweißverfahren führen kann. Dazu wird Schmelze während des Erstarrens mit Ultraschall beaufschlagt, um die Kristallisationsvorgänge vorteilhaft zu beeinflussen. All diesen Ansätzen wohnt inne, dass der beaufschlagte Stoff sich entweder in einem losen oder flüssigen Zustand befindet.

Im Gegensatz hierzu wird bisher stets davon ausgegangen, dass ein fester nicht geschmolzener Stoff durch Beaufschlagung mit Ultraschall nicht verändert wird. Beispielsweise wird bei einer Ultraschallprüfung der zu prüfende Festkörper nicht verändert.

Das Rührreibschweißverfahren (Friction Stir Welding, FSW) wurde 1991 am TWI (The Welding Institut), England, entwickelt und konnte sich seither im Bereich des Fügens von Leichtmetallen etablieren. Das Rührreibschweißen findet bereits in Schiff- und Luftfahrt sowie in der Fertigung von Schienen- und Straßenfahrzeugen Anwendung.

Der Prozessablauf des Rührreibschweißens weist normalerweise die folgenden Schritte auf: Zunächst wird ein rotierendes Werkzeug mit hoher Kraft so lange an der Berührungsstelle zweier Werkstücke zwischen die zwei Werkstücke gedrückt, bis die Werkzeugschulter auf der Werkstückoberfläche zur Anlage kommt. Das sich drehende Werkzeug verweilt dann für einige Sekunden an der Eintauchstelle. Durch die Reibung zwischen Werkzeugschulter und den Fügepartnern erwärmt sich der Werkstoff unter der Schulter bis kurz unter den Schmelzpunkt der Fügepartner, wird jedoch nicht geschmolzen oder verflüssigt. Dieser Temperaturanstieg hat dennoch einen Festigkeitsabfall zur Folge, wodurch der Werkstoff plastifiziert wird und eine Vermischung der Fügezone erreicht wird. Es wird nun das Werkzeug entlang der Fügezone mit hoher Anpresskraft bewegt. Es entsteht ein Druckgradient zwischen der Vorder- und der Rückseite des Werkzeugs. Die Rotationsbewegung bewirkt den Transport von plastifiziertem Werkstoff um das Werkzeug herum, welcher sich dann vermischt und die Naht bildet. Am Ende der Naht wird das Werkzeug aus der Fügezone herausgezogen.

Die Oberflächen von Aluminiumlegierungen überziehen sich bei Zimmertemperatur durch Oxidation und Passivierung nahezu sofort (<< 1 s) mit einer dünnen, amorphen Oxidschicht und reagieren im weiteren Verlauf mit dem Luftsauerstoff bis zu einer Oxidschichtdicke von etwa 10 nm. Bei hohen Temperaturen, wie sie beim Warmwalzen von Aluminium mit auf 500 bis 600 °C vorgewärmten Großbarren als Vormaterial vorkommen, erreicht die Oxidschicht eine Dicke von bis zu 100 µm. (Sato, Y. S., et al. "Characteristics of the kissing-bond in friction stir welded Al alloy 1050", Materials Science and Engineering A 405 (2005): 333-38; Sato, Y. S., et al. "FIB-assisted TEM study of an oxide array in the root of a friction stir welded aluminum alloy", Scripta Materialia 50 (2003): 365-69).

Durch den Rührreibschweißprozess werden diese Oxidanhaftungen in das Nugget der Schweißverbindung eingearbeitet. Die Oxidpartikel lagern sich zu charakteristischen Bändern entlang der gesamten Schweißnaht zusammen und sind im Querschliff deutlich als Linie zu erkennen. Gerade bei hoch beanspruchten, sicherheitsrelevanten Bauteilen stellt jedoch jede Art von Unregelmäßigkeit in der Schweißnaht eine potentielle Gefahrenstelle dar.

Die hieraus für die Naht entstehende Problematik findet mittlerweile in der Literatur weltweit Beachtung. Das Phänomen ist u.a. als "Root-Flaw" oder "Nugget-Flaw" sowie "Line-type feature", "Lazy-S" und "Zickzack-Linie" bekannt. In jüngster Zeit wird auch "Joint Line Remnant" als Beschreibung für diese Oxidbänder im Rührreibschweißnugget verwendet.

Mehrere Studien belegen, dass "Root-Flaws" in allen untersuchten FSW-Nähten vorkommen und bei einigen Aluminiumlegierungen eine deutliche Abnahme der Zug- und Schwingfestigkeit verursachen, da sich die Root-Flaws innerhalb weniger Zyklen öffnen.

Die Entstehung dieser Unregelmäßigkeit kann nach dem derzeitigen Stand der Technik lediglich durch eine unmittelbar vor dem Schweißprozess erfolgte, mechanische Beseitigung der Oberflächenoxide vermieden werden (Okumara, H., et al. "Behaviour of oxides during friction stir welding of aluminium alloy and their effect on its mechanical properties", Welding International 16.4 (2002): 266-75; Leonard, A. J. und S. A. Lockyer. "Flaws in Friction Stir Welds", May 14, 2003 Park City, US: TWI, 2003.V 1-10; Jene, T., et al. "Monitoring of the Friction Stir Welding Process to Describe Parameter Effects on Joint Quality", TWI, 2007). Die mechanische Entfernung bedeutet nicht nur einen erhöhten Zeit- und Maschinenaufwand. Die Prozessvorbereitung verlangt auch nach einer gesonderten Berücksichtigung in der Fertigungsplanung, wodurch es zu Mehrkosten kommt.

Es ist daher Aufgabe der vorliegenden Erfindung, ein Rührreibschweißverfahren anzugeben, welches das Auftreten dieser Oxidbänder vermeidet und wesentlich ermüdungsstabilere Werkstoffe ermöglicht, ohne eine kostenintensive Arbeitsvorbereitung vorauszusetzen.

Diese Aufgabe wird gelöst durch das Verfahren nach Anspruch 1, sowie das verschweißte Werkstück nach Anspruch 11. Die jeweiligen abhängigen Ansprüche geben vorteilhafte Weiterbildungen des Verfahrens, sowie des verschweißten Werkstücks an. Beim konventionellen Rührreibschweißen oszillieren die Schweißkräfte in x-, y- und z-Richtung. Diese Kräfte können mit Hilfe eines nachrüstbaren Kraftmesstisches gemessen werden. Die Oxidpartikel ordnen sich in einem dem Verhältnis von Vorschub pro Werkzeugumdrehung (v_{f}) entsprechenden Muster an.

Der Erfindung liegt die überraschende Erkenntnis zugrunde, dass die Ausbildung eines Oxidbandes vermieden werden kann, wenn während des Verschweißens zumindest eines der Werkstücke mit Ultraschall beaufschlagt wird, obwohl das Material während des Reibrührschweißens nicht geschmolzen wird, sondern ein Festkörper bleibt. Der Ultraschall wird dabei vorzugsweise in einem Bereich der Werkstücke eingebracht, in welchem diese miteinander verschweißt werden.

Es ist überraschend, dass der feste Werkstoff, wie er beim Rührreibschweißablauf während des ganzen Prozesses vorliegt, durch den Ultraschall positiv beeinflusst wird.

Der Rührreibschweißprozess ist seit über 18 Jahren bekannt. Dennoch wurde, obwohl bei den Schmelzschweißverfahren bekannt, nie versucht, die Rührreibschweißnahtqualität durch Ultraschallbeaufschlagung zu verbessern, da diese Vorgehensweise den bisherigen Erfahrungen mit nicht geschmolzenen Werkstoffen völlig widerspricht. Der Ansatz, den Fügeprozess mit Leistungsultraschall zu überlagern ist daher als völlig neu anzusehen.

Hinzu kommt, dass die ursächlichen Oxidlinien, die insbesondere auch das Ermüdungsverhalten entscheidend beeinflussen, erst seit kurzem in Schliffen überhaupt sichtbar gemacht werden können. Die gezielte Verbesserung der Mikrostruktur im festen Zustand und somit des quasistatischen und insbesondere zyklischen Verhaltens der rührreibgeschweißten Verbunde durch Beaufschlagung mit Leistungsultraschall stellt daher, wie bereits erwähnt, einen dramatisch neuen Ansatz mit erheblicher Erfindungsleistung dar.

Besonders geeignet und daher bevorzugt ist, wenn der Ultraschall eine Frequenz größer oder gleich 17 kHz, vorzugsweise größer oder gleich 30 kHz, vorzugsweise größer oder gleich 50 kHz hat. Außerdem ist bevorzugt, wenn der Ultraschall eine Frequenz kleiner oder gleich 120 kHz, vorzugsweise kleiner oder gleich 100 kHz, vorzugsweise kleiner oder gleich 80 kHz hat.

Für die Amplitude des Ultraschalls hat es sich als vorteilhaft erwiesen, wenn diese größer oder gleich 3 µm, vorzugsweise größer oder gleich 10 µm, vorzugsweise größer oder gleich 30 µm ist. Vorzugsweise ist die Amplitude außerdem kleiner oder gleich 60 µm, vorzugsweise kleiner oder gleich 50 µm, vorzugsweise kleiner oder gleich 40 µm.

Verschiedene Vorgehensweisen sind denkbar, den Ultraschall in das oder die Werkstücke einzubringen. Eine Möglichkeit besteht darin, den Ultraschall mittels einer Sonotrode in das oder die Werkstücke einzubringen. Die Sonotrode wird dabei auf eines der Werkstücke, auf beide Werkstücke und/oder die Naht, entlang der verschweißt wird, aufgebracht. Es ist möglich, die Sonotrode so aufzubringen, dass sie senkrecht zur Längsrichtung der Naht und/oder senkrecht zur Oberfläche der zu verschweißenden Werkstücke schwingt. Sie kann aber auch so angebracht werden, dass sie parallel zur Berührungsfläche der zu verschweißenden Werkstücke, d.h. in Längsrichtung der Naht, schwingt.

Alternativ oder zusätzlich kann auch das Schweißwerkzeug selbst Ultraschall in das oder die Werkstücke einbringen. Hierbei kann das Werkzeug in der Frequenz des Ultraschalls in einer Richtung im Wesentlichen oder genau senkrecht zur Oberfläche der Werkstücke, senkrecht zur Längsrichtung der Schweißnaht und/oder der Berührungsfläche zwischen den Werkstücken schwingen. Das Werkzeug kann aber auch parallel zur Oberfläche und dabei senkrecht zur Schweißnaht und/oder parallel zur Schweißnaht schwingen.

Vorzugsweise wird der Ultraschall parallel zur Längsrichtung der Schweißnaht bzw. der Berührungsfläche zwischen den zu verschweißenden Werkstücken eingebracht. Er kann so eingebracht werden, dass er sich parallel zur Längsrichtung der Schweißnaht ausbreitet und/oder sich in einer Ebene der Oberfläche ausbreitet, auf welcher sich das Schweißwerkzeug bewegt. Auch kann sich der Ultraschall voluminös, d.h. in alle Raumrichtungen in dem oder den Werkstücken ausbreiten.

Der Ultraschall kann außerdem senkrecht zur Längsrichtung der Schweißnaht des Rührreibschweißens eingebracht werden. Er kann so eingebracht werden, dass er sich parallel zur Längsrichtung der Schweißnaht ausbreitet und/oder sich in einer Ebene der Schweißnaht ausbreitet, d.h. in der durch die aneinander grenzenden Flächen der beiden zu verbindenden Werkstücke definierten Ebene. Der Ultraschall kann sich außerdem in einer Richtung senkrecht zu dieser Ebene ausbreiten.

Erfindungsgemäß kann der Ultraschall als Longitudinalwelle und/oder als Transversalwelle eingebracht werden. Als Longitudinalwelle kann er sich wie oben beschrieben in dem oder den Werkstücken ausbreiten. Als Transversalwelle kann er außerdem so eingebracht werden, dass seine Amplitude im Wesentlichen senkrecht auf jener Oberfläche der zu verbindenden Werkstücke steht, auf welcher das Schweißwerkzeug entlang läuft. Außerdem kann bei einer Transversalwelle die Amplitude senkrecht auf der Fläche der Schweißnaht stehen, d.h. senkrecht auf jenen Flächen der Werkstücke, mit welchen die Werkstücke aneinander geschweißt werden. Insbesondere kann sich der Ultraschall auch als Scherwelle in dem oder den Werkstücken ausbreiten.

Erfindungsgemäß wird außerdem ein verschweißtes Werkstück bereitgestellt, welches nach dem oben beschriebenen Verfahren hergestellt ist. Dieses Werkstück weist entlang der Schweißnaht kein Oxidband auf. Da das erfindungsgemäße Verfahren besonders für Leichtmetall, insbesondere Aluminium, geeignet ist, weist das Werkstück vorteilhafterweise ein Leichtmetall wie z.B. Aluminium auf oder besteht daraus.

Durch die Ultraschallunterstützung kann das Rührreibschweißverfahren deutlich verbessert werden. Bislang konnten Oxidlinien im Schweißnugget lediglich durch eine kostenintensive Arbeitsvorbereitung vermieden werden. Diese Vorarbeit kann durch den vorgestellten Lösungsweg entfallen. Das ultraschallunterstützte Rührreibschweißen bietet die Möglichkeit, unbehandelte Bauteile ohne nachweisbare Oxidlinien zu verschweißen.

Über den unmittelbaren Vorteil der Oxidlinienvermeidung und der daraus resultierenden Verbesserung der mechanischen Eigenschaften hinaus wirkt sich die Ultraschallunterstützung auch in anderen Aspekten positiv auf den Schweißprozess aus. So ermöglicht die zusätzliche Energiezufuhr beispielsweise eine höhere Schweißgeschwindigkeit.

Durch die Integration eines internen oder externen Schwingersystems in den Rührreibschweißprozess lässt sich das Verfahren deutlich verbessern. Über den aktiven Eingriff in den Prozess hinaus besteht zudem die Möglichkeit, den eingebrachten Ultraschall gleichzeitig zur zerstörungsfreien Prüfung einzusetzen und die Naht somit inline bezüglich anderer Unregelmäßigkeiten, wie z.B. Schlauchporen zu überprüfen. Eine derartige zerstörungsfreie Prüfung ist beispielsweise in der DE 198 10 509 C2 beschrieben.

Im Folgenden soll die Erfindung anhand einiger Figuren beispielhaft erläutert werden.

Es zeigt
- Figur 1: eine Schweißvorrichtung zur Durchführung des erfindungsgemäßen Verfahrens,
- Figur 2: eine weitere Schweißvorrichtung zur Durchführung des erfindungsgemäßen Verfahrens,
- Figur 3: eine Spannungswöhlerlinie von AlMg₃Mn-Verbunden bei R = 0,
- Figur 4: Querschliffe der HAZ ohne (Fig. 4A) und mit (Fig. 4B) Ultraschallunterstützung, und
- Figur 5: eine Spannungswöhlerlinie eines weiteren AlMg₃Mn-Verbundes bei R ≈ 0.

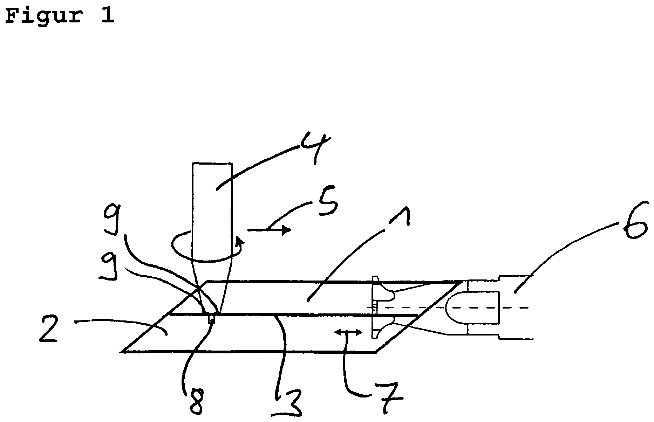

Figur 1 zeigt eine Vorrichtung zur Durchführung des erfindungsgemäßen Rührreibschweißverfahrens. Hierbei werden zwei Werkstücke 1 und 2 entlang einer Schweißnaht 3 miteinander verschweißt. Hierzu bewegt sich ein rotierendes Werkzeug 4 zum Durchführen des Rührreibschweißverfahrens entlang der Richtung 5 auf eine Sonotrode 6 zu, mit welcher Ultraschall auf die zu verbindenden Werkstücke 1 und 2 beaufschlagbar ist. Im gezeigten Beispiel wird der Ultraschall als Longitudinalwelle mit der Schwingungsrichtung 7 eingebracht. Der Ultraschall wird also in einer Richtung parallel zur Längsrichtung der Schweißnaht 3 eingebracht. Im gezeigten Beispiel steht das Werkzeug 4 senkrecht auf der durch die Oberflächen der Werkstücke 1 und 2 beschriebenen Ebene. Das Werkzeug 4 weist einen Stift 8 auf, mit welchem es zwischen die Fügepartner 1 und 2 gedrückt wird. Der Stift 8 taucht in die Schweißnaht 3 auf seiner ganzen Länge ein, so dass das Werkzeug 4 mit den Schultern 9 auf der Oberfläche der zu fügenden Werkstücke 1 und 2 aufliegt.

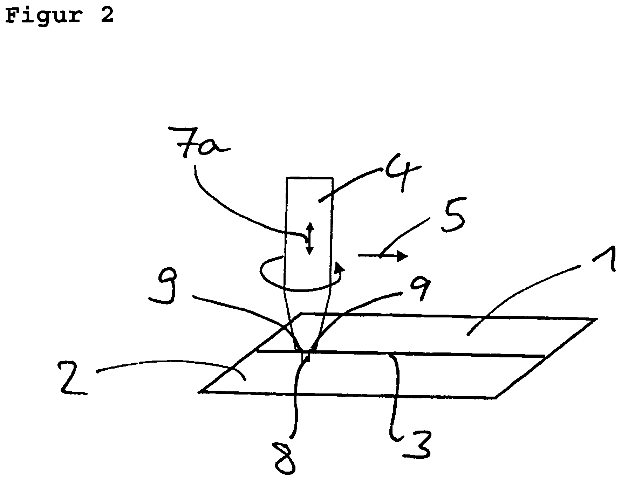

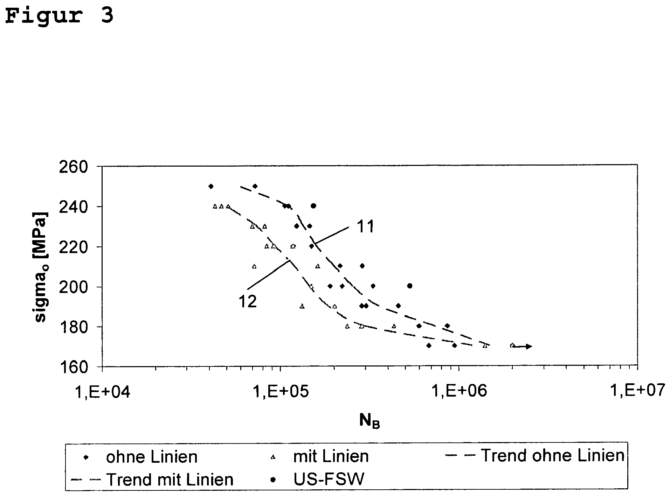

Figur 2 zeigt eine weitere Ausführungsform eines Werkzeugs zum Durchführen des erfindungsgemäßen Verfahrens. Gleiche Bezugszeichen bezeichnen hier entsprechende Komponenten wie in Figur 1. Im in Figur 2 gezeigten Beispiel wird der Ultraschall durch eine Schwingung des Werkzeugs 4 in die Fügepartner 1 und 2 eingebracht. Hierzu schwingt das Werkzeug 4 entlang der Richtung 7a, d.h. in Richtung seiner Längsrichtung. Der Ultraschall wird also mit einer Amplitude senkrecht zur Oberfläche der zu fügenden Werkstücke 1 und 2 und senkrecht zur Längsrichtung der Schweißnaht 3 eingebracht. Hierbei können sich im Inneren des Werkstücks Longitudinalwellen ausbreiten. An der Oberfläche der zu fügenden Werkstücke 1 und 2 können sich außerdem Transversalwellen ausbreiten. Wiederum wird das Werkzeug entlang der Richtung 5 in der Schweißnaht 3 geführt. Figur 3 zeigt ein Wöhlerdiagramm eines AlMg₃Mn-Verbunds bei R = 0 (mittelspannungsbehaftet), bei dem Ultraschall mit einer Frequenz von 20 kHz und einer Amplitude von 40 µm in x-, y- und z-Richtung eingebracht wurde.

R stellt dabei das Spannungsverhältnis von Unterspannung zu Oberspannung dar. Ein Wert von R = 0 besagt demnach, dass mit einer unteren Spannung von Null gefahren wird; eine Spannungsamplitude von 100 MPa bei R = 0 besagt, dass die Mittelspannung bei 100 MPa und die Oberspannung bei 200 MPa liegt.

Hierbei ist Kurve 11 die Wöhlerlinie für eine Schweißnaht ohne Oxidbänder und Linie 12 für eine Schweißnaht mit Oxidbändern. Die gestrichelten Linien geben hierbei den Trend an, während die Punkte die Messergebnisse zeigen. Sigma₀ gibt hierbei die Nennspannungsamplitude an, während N_{B} die Schwingspielzahl ist, bei welcher die Schweißnaht versagt. Es ist deutlich zu erkennen, dass bei Proben ohne nachweisbare Oxidbänder 11 im Vergleich zu konventionell rührreibgeschweißten Proben 12 mit Oxidlinien die Bruchlastspielzahlen (Zyklenzahl bis zum Bruch) um ca. 50 % höher sind. Die Verbunde ohne Oxidlinien wurden durch ein vorheriges Entfernen der Oxide hergestellt. Das erfindungsgemäße Verfahren führt also zu deutlich haltbareren Verbindungen als Rührreibschweißverfahren nach dem Stand der Technik.

Die beiden runden Punkte ganz rechts bei 200 und 240 MPa wurden mit dem erfindungsgemäßen Verfahren erzeugt. Hierbei spielt die feine Verteilung der Ausscheidungen zusätzlich zur Vermeidung nachweisbarer Oxidlinien ohne vorheriges Entfernen der Oxidhaut eine wichtige Rolle. Bei den hier gezeigten Versuchen wurden Zyklenzahlen erreicht, die 3 mal bzw. 3,5 mal höher liegen als die von FSW-Nähten mit Oxidlinien.

Eine quantitative Korngrößenanalyse zwischen konventionell und mit Ultraschallunterstützung geschweißten Rührreibschweißnähten ergab zwar weder in der Wärmeeinflusszone (HAZ), noch in der Nahtmitte, dem Nugget, signifikante Unterschiede.

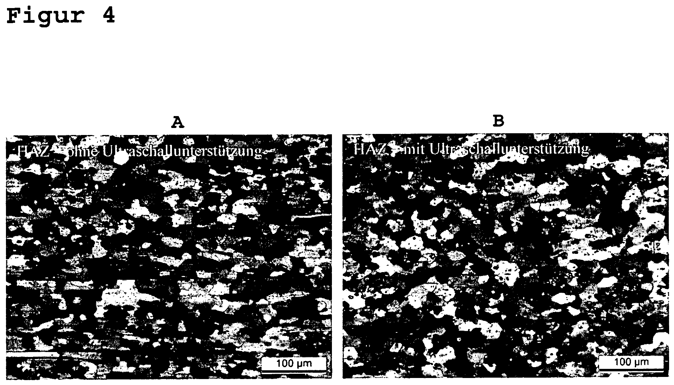

Allerdings kommt es durch die Ultraschallunterstützung zu einer feineren Verteilung der Ausscheidungen im Werkstoff. In den Figuren 4A und 4B sind diese Ausscheidungen als dunkle Bereiche sichtbar. Während in der Aufnahme der HAZ der konventionell geschweißten Naht (Fig. 4A) wenige große Ausscheidungen erkennbar sind, kommt es durch die Ultraschallunterstützung (Fig. 4B) zu einer wesentlich feineren Verteilung. Diese feine Verteilung der Ausscheidungen wirkt sich signifikant positiv auf die Ermüdungsfestigkeit aus.

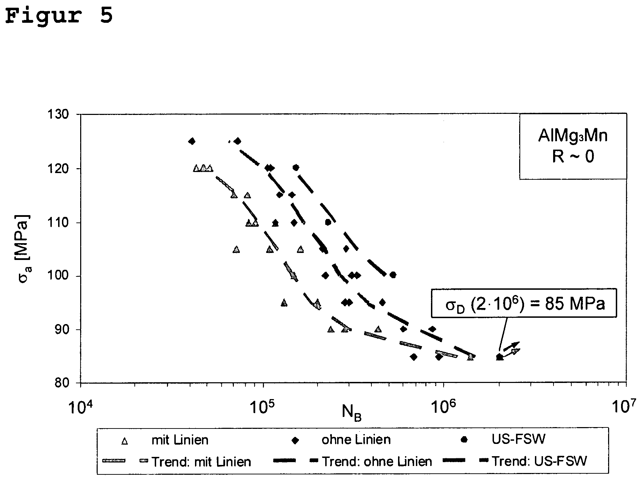

Der entscheidende Vorteil des Einsatzes von Leistungsultraschall an FSW-Verbunden ist nochmals in der Figur 5 dargestellt. Auch zur Messung dieser Figur 5 wurde Ultraschall mit einer Frequenz von 20 kHz und einer Amplitude von 40 µm verwendet. Es ist unmittelbar erkennbar, dass die Beaufschlagung mit Leistungsultraschall zu einer erheblichen Verbesserung der Ermüdungseigenschaften der erzeugten Rührreibschweißverbindung führt, gekennzeichnet durch eine Verschiebung der Kurven zu höheren Bruchlastspielzahlen N_{B}.

Die linke Kurve (Dreiecke) dokumentiert das Ermüdungsverhalten von rührreibgeschweißten Al-Proben, die im Schliffbild Oxidlinien zeigen, die mittlere Kurve (Rauten) zeigt das Ermüdungsverhalten von Al-Proben ohne Oxidlinien nach Reibrührschweißen. Gegenüber der linken Kurve ergibt sich ein Gewinn im Ermüdungsverhalten, wenn keine Oxidlinien vorhanden sind. Die rechte Kurve (Kreise) zeigt den Erfolg einer zusätzlichen Ultraschallbehandlung einer Probe wie die Probe der mittleren Kurve.

Die Bruchlastwechselzahl N_{B}, z.B. bei einer Last von 110 MPa wächst also von 10⁵ für die Probe mit Oxidlinien über 1 x 10⁵ für die mittlere Kurve auf 2 x 10⁵ für die ultraschallbeaufschlagte rührreibgeschweißte Probe an. Dies entspricht einem Gewinn an Lebensdauer aufgrund der Ultraschallbeaufschlagung um den Faktor 2.

## Patentansprüche

1. Verfahren zum Verschweißen von Werkstücken, welche ein Leichtmetall aufweisen oder daraus bestehen, und eine Oxidhaut aufweisen, wobei zumindest zwei Werkstücke (1,2) mittels Rührreibschweißen miteinander verschweißt werden, wobei Flächen der Werkstücke, mit welchen die Werkstücke verschweißt werden, aneinander angrenzen, **dadurch gekennzeichnet, dass** die zumindest zwei Werkstücke während des Verschweißens in zumindest einem Bereich, in dem sie verschweißt werden, mit Ultraschall beaufschlagt werden, wobei in diesem Bereich unmittelbar vor dem Verschweißen keine Beseitigung von Oxiden an der Oberfläche der Werkstücke stattfindet.

2. Verfahren nach Anspruch 1, **dadurch gekennzeichnet, dass** Ultraschall einer Frequenz größer oder gleich 17 kHz, vorzugsweise größer oder gleich 30 kHz, vorzugsweise größer oder gleich 50 kHz beaufschlagt wird.

3. Verfahren nach einem der vorhergehenden Ansprüche, **dadurch gekennzeichnet, dass** Ultraschall einer Frequenz kleiner oder gleich 120 kHz, vorzugsweise kleiner oder gleich 100 kHz, vorzugsweise kleiner oder gleich 80 kHz beaufschlagt wird.

4. Verfahren nach einem der vorhergehenden Ansprüche, **dadurch gekennzeichnet, dass** Ultraschall mit einer Amplitude größer oder gleich 3 µm, vorzugsweise größer oder gleich 10 µm, vorzugsweise größer oder gleich 30 um beaufschlagt wird.

5. Verfahren nach einem der vorhergehenden Ansprüche, **dadurch gekennzeichnet, dass** Ultraschall mit einer Amplitude kleiner oder gleich 60 µm, vorzugsweise kleiner oder gleich 50 um, vorzugsweise kleiner oder gleich 40 µm beaufschlagt wird.

6. Verfahren nach einem der vorhergehenden Ansprüche, **dadurch gekennzeichnet, dass** Ultraschall mittels zumindest einer Sonotrode (6) eingebracht wird.

7. Verfahren nach einem der vorhergehenden Ansprüche, **dadurch gekennzeichnet, dass** Ultraschall parallel zu einer Längsrichtung einer Schweißnaht des Rührreibschweißens eingebracht wird und/oder so eingebracht wird, dass er sich parallel zur Längsrichtung der Schweißnaht (3) ausbreitet und/oder sich in einer Ebene der Fläche zumindest eines der Werkstücke und/oder sich im Volumen zumindest eines der Werkstücke ausbreitet.

8. Verfahren nach einem der vorhergehenden Ansprüche, **dadurch gekennzeichnet, dass** Ultraschall senkrecht zu einer Längsrichtung einer (3) des Rührreibschweißens eingebracht wird und/oder so eingebracht wird, dass er sich parallel zur Längsrichtung der Schweißnaht ausbreitet und/oder sich in einer Ebene der Schweißnaht ausbreitet und/oder senkrecht zu einer Ebene der Schweißnaht ausbreitet.

9. Verfahren nach einem der vorhergehenden Ansprüche, **dadurch gekennzeichnet, dass** der Ultraschall als Longitudinalwelle und/oder als Transversalwelle eingebracht wird.

10. Verfahren nach einem der vorhergehenden Ansprüche, **dadurch gekennzeichnet, dass** der Ultraschall über ein das Rührreibschweißen bewirkendes Werkzeug (4) eingebracht wird.

11. Verschweißtes Werkstück, welches ein Leichtmetall enthält oder daraus besteht, und eine Oxidhaut aufweist, **dadurch gekennzeichnet, dass** es nach einem der Ansprüche 1 bis 10 hergestellt ist und dass es kein Oxidband entlang einer Schweißnaht (3) aufweist.

## Claims

1. Method for welding workpieces comprising or consisting of a light metal and having an oxide skin, wherein at least two workpieces (1, 2) are welded together by means of friction stir welding, wherein surfaces of the workpieces with which the workpieces are welded together are abutting, **characterised in that** during welding, the at least two workpieces are treated with ultrasound in at least one region in which they are welded, wherein in this region, no removal of the surface oxides of the workpieces is effected directly before the welding process.

2. Method according to claim 1, **characterised in that** treatment takes place with ultrasound of a frequency of greater than or equal to 17 kHz, preferably greater than or equal to 30 kHz, preferably greater than or equal to 50 kHz.

3. Method according to one of the preceding claims, **characterised in that** treatment takes place with ultrasound of a frequency less than or equal to 120 kHz, preferably less than or equal to 100 kHz, preferably less than or equal 80 kHz.

4. Method according to one of the preceding claims, **characterised in that** treatment takes place with ultrasound with an amplitude of greater than or equal to 3 µm, preferably greater than or equal to 10 µm, preferably greater than or equal to 30 µm.

5. Method according to one of the preceding claims, **characterised in that** treatment takes place with ultrasound with an amplitude of less or equal to 60 µm, preferably less than or equal to 50 µm, preferably less than or equal to 40 µm.

6. Method according to one of the preceding claims, **characterised in that** ultrasound is introduced by means of at least one sonotrode (6).

7. Method according to one of the preceding claims, **characterised in that** ultrasound is introduced parallel to a longitudinal direction of a weld seam of the friction stir welding and/or introduced such that it propagates parallel to the longitudinal direction of the weld seam (3) and/or propagates in one plane of the surface of at least one of the workpieces and/or in the volume of at least one of the workpieces.

8. Method according to one of the preceding claims, **characterised in that** ultrasound is introduced perpendicular to a longitudinal direction of a weld seam (3) of the friction stir welding and/or is introduced such that it propagates parallel to the longitudinal direction of the weld seam and/or propagates in one plane of the weld seam and/or propagates perpendicular to one plane of the weld seam.

9. Method according to one of the preceding claims, **characterised in that** the ultrasound is introduced as a longitudinal wave and/or as a transverse wave.

10. Method according to one of the preceding claims, **characterised in that** the ultrasound is introduced via a tool (4) effecting the friction stir welding.

11. Welded workpiece comprising or consisting of a light metal and having an oxide skin, **characterised in that** it is produced according to one of the claims 1 to 10 and that it has no oxide band along a weld seam (3).

## Revendications

1. Procédé de soudure de pièces qui contiennent un métal léger ou sont constituées de celui-ci, et qui comprennent une couche d'oxyde, au moins deux pièces (1, 2) étant soudées entre elles par soudure par friction à mouvement cyclique, les surfaces des pièces, avec lesquelles les pièces sont soudées, étant adjacentes, **caractérisé en ce que** les au moins deux pièces étant soumises, pendant la soudure, au niveau d'au moins une zone, dans laquelle elles sont soudées, à des ultrasons, moyennant quoi, dans cette zone, aucune élimination d'oxydes n'ayant lieu sur la surface des pièces avant la soudure.

2. Procédé selon la revendication 1, **caractérisé en ce que** des ultrasons d'une fréquence supérieure ou égale à 17 kHz, de préférence supérieure ou égale à 30 kHz, de préférence supérieure ou égale à 50 kHz sont appliqués.

3. Procédé selon l'une des revendications précédentes, **caractérisé en ce que** des ultrasons d'une fréquence inférieure ou égale à 120 kHz, de préférence inférieure ou égale à 100 kHz, de préférence inférieure ou égale à 80 kHz sont appliqués.

4. Procédé selon l'une des revendications précédentes, **caractérisé en ce que** des ultrasons d'une amplitude supérieure ou égale à 3 µm, de préférence supérieure ou égale à 10 µm, de préférence supérieure ou égale à 30 µm sont appliqués.

5. Procédé selon l'une des revendications précédentes, **caractérisé en ce que** des ultrasons d'une amplitude inférieure ou égale à 60 µm, de préférence inférieure ou égale à 50 µm, de préférence inférieure ou égale à 40 µm sont appliqués.

6. Procédé selon l'une des revendications précédentes, **caractérisé en ce que** les ultrasons sont appliqués à l'aide d'au moins une sonotrode (6).

7. Procédé selon l'une des revendications précédentes, **caractérisé en ce que** les ultrasons sont appliqués parallèlement à une direction longitudinale d'un cordon de soudure de la soudure par friction à mouvement cyclique et/ou sont appliqués de façon à ce qu'ils se propagent parallèlement à la direction longitudinale du cordon de soudure (3) et/ou se propagent dans un plan de la surface d'au moins une des pièces et/ou se propagent dans le volume d'au moins une des pièces.

8. Procédé selon l'une des revendications précédentes, **caractérisé en ce que** les ultrasons sont appliqués perpendiculairement à une direction longitudinale d'un cordon de soudure (3) de la soudure par friction à mouvement cyclique et/ou appliqués de façon à ce qu'ils se propagent parallèlement à la direction longitudinale du cordon de soudure et/ou se propagent dans un plan du cordon de soudure et/ou se propagent perpendiculairement à un plan du cordon de soudure.

9. Procédé selon l'une des revendications précédentes, **caractérisé en ce que** les ultrasons sont appliqués sous la forme d'ondes longitudinales et/ou sous la forme d'ondes transversales.

10. Procédé selon l'une des revendications précédentes, **caractérisé en ce que** les ultrasons sont appliqués par l'intermédiaire d'un outil (4) produisant une soudure par friction à mouvement cyclique.

11. Pièce soudée qui contient un métal léger ou est constituée de celui-ci, et comprend une couche d'oxyde, **caractérisée en ce qu'**elle est fabriquées selon l'une des revendications 1 à 10 et **en ce qu'**elle ne présente aucune couche d'oxyde le long d'un cordon de soudure (3).
